(19) Europäisches Patentamt
European Patent Office
Office européen des brevets

(11) **EP 3 614 178 A1**

(12) **EUROPEAN PATENT APPLICATION**
published in accordance with Art. 153(4) EPC

(43) Date of publication:
**26.02.2020 Bulletin 2020/09**

(51) Int Cl.:
*G01S 19/14* (2010.01)          *B63B 49/00* (2006.01)
*B64F 5/60* (2017.01)          *G01B 21/32* (2006.01)
*G01S 19/54* (2010.01)

(21) Application number: **18787763.4**

(22) Date of filing: **27.03.2018**

(86) International application number:
**PCT/JP2018/012368**

(87) International publication number:
**WO 2018/193797 (25.10.2018 Gazette 2018/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.04.2017 JP 2017081713**

(71) Applicant: **Furuno Electric Co., Ltd.
Nishinomiya-City, Hyogo 662-8580 (JP)**

(72) Inventors:
• **NAKAMURA, Hiraku**
  **Nishinomiya-City**
  **Hyogo 662-8580 (JP)**
• **TODA, Hiroyuki**
  **Nishinomiya-City**
  **Hyogo 662-8580 (JP)**
• **FUJISAWA, Naomi**
  **Nishinomiya-City**
  **Hyogo 662-8580 (JP)**

(74) Representative: **CSY London
10 Fetter Lane
London EC4A 1BR (GB)**

(54) **LOAD MEASURING DEVICE, LOAD MEASURING METHOD, AND LOAD MEASURING PROGRAM**

(57)     The load can be measured with a simple configuration. A load measuring device 20 include a load measurement antenna 204, a plurality of reference antennas 201, 202, and 203, and a processor 220. The load measurement antenna 204 be disposed at a load measuring position of a structure. The plurality of reference antennas 201, 202, and 203 be disposed at positions of the structure different from the load measuring position. The processor calculate a load based on changes in relative positions of the load measurement antenna 204 with respect to the plurality of reference antennas 201, 202, and 203 by using positioning signals received by the load measurement antenna and the plurality of reference antennas 201, 202, and 203.

FIG. 1

**Description**

TECHNICAL FIELD

The present disclosure relates to a load measuring device, a method of measuring a load, and a load measurement program, which measures a load of a large-sized structure including a large-sized movable body, such as a ship and an aircraft.

BACKGROUND ART

In ships, such as large-sized merchant ships, a hull receives a stress by a cruise, loading of a cargo, etc. According to the stress, for example, a load, such as a deflection and a strain, occurs in the hull. Accumulation of such a load may lead to a change in the characteristics of the hull and damage to the hull to the extent that safe cruises, steering, etc. are affected. Therefore, it is desired to measure the load on the hull.

Therefore, various systems which measure the load on the hull have been conventionally devised. For example, Nonpatent Document 1 discloses a hull load monitoring system which uses an optical fiber etc. and a high precision sensor.

[Reference Document of Conventional Art]

[Nonpatent Document]

[Nonpatent Document 1] The internet, http://dspace.dsto.defence.gov.au/dspace/bitstream/desto/10246/1/DSTO-TR-2 818%20PR.pdf

DESCRIPTION OF THE DISCLOSURE

[Problems to be Solved by the Disclosure]

However, the configuration of Nonpatent Document 1 requires a large-scale installation work, and, therefore, it cannot measure the load with a simple configuration.

Note that such a load is not limited to for ships, but it is important for large-sized movable bodies, such as aircrafts. In addition, such a load is also a problem which may occur in a large-sized structure, other than the large-sized movable bodies.

Therefore, one purpose of the present disclosure is to provide a load measuring device, a method of measuring a load, and a load measurement program which can measure a load with a simple configuration.

[Summary of the Disclosure]

A load measuring device according to one aspect of the present disclosure includes a load measurement antenna, a plurality of reference antennas, and a processor. The load measurement antenna is disposed at a load measuring position of a structure. The plurality of reference antennas is disposed at positions of the structure different from the load measuring position. The processor calculates a load based on changes in relative positions of the load measurement antenna with respect to the plurality of reference antennas by using positioning signals received by the load measurement antenna and the plurality of reference antennas.

According to this configuration, by using the positioning signals received by the load measurement antenna and the plurality of reference antennas, a displacement of the measuring position can be calculated and the load on the measuring position can be calculated based on the displacement.

[Effect of the Disclosure]

According to the present disclosure, the load can be measured with the simple configuration.

BRIEF DESCRIPTION OF DRAWINGS

Fig. 1(A) is a functional block diagram of a load measuring device according to a first embodiment of the present disclosure, and Fig. 1(B) is a functional block diagram of a processor.
Fig. 2(A) is a plan view illustrating a layout of antennas of the load measuring device according to the first embodiment of the present disclosure, and Fig. 2(B) is a side view illustrating the layout of the antennas.
Fig. 3 is a first flowchart of a method of measuring a load according to the first embodiment of the present disclosure.
Fig. 4 is a flowchart of a calculation of the load.
Fig. 5 is a second functional block diagram of the processor of the load measuring device according to the first embodiment of the present disclosure.
Fig. 6 is a second flowchart of the method of measuring the load according to the first embodiment of the present disclosure.
Fig. 7 is a flowchart of a method of calculating a reference attitude angle.
Fig. 8 is a functional block diagram of a load measuring device according to a second embodiment of the present disclosure.
Fig. 9(A) is a plan view illustrating a layout of antennas of the load measuring device according to the second embodiment of the present disclosure, and Fig. 9(B) is a side view illustrating the layout of the antennas.
Fig. 10 is a functional block diagram of a load measuring device according to a third embodiment of the present disclosure.
Fig. 11 is a side view illustrating a layout of antennas of the load measuring device according to the third embodiment of the present disclosure.

MODES FOR CARRYING OUT THE DISCLOSURE

A load calculating device, a method of calculating a load, and a load calculating program according to a first embodiment of the present disclosure will be described with reference to the drawings.

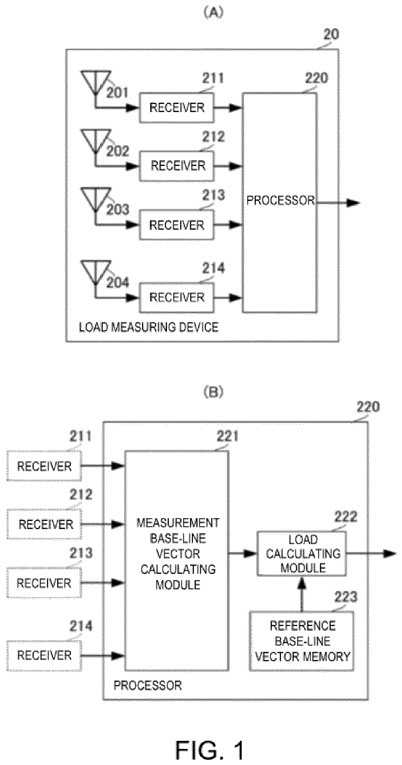

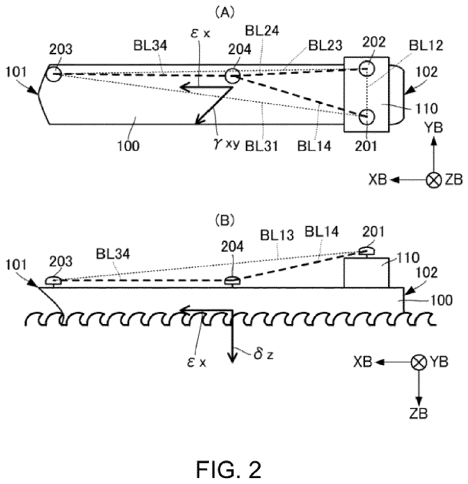

Fig. 1(A) is a functional block diagram of a load measuring device according to a first embodiment of the present disclosure, and Fig. 1(B) is a functional block diagram of a processor. Fig. 2(A) is a plan view illustrating a layout of antennas of the load measuring device according to the first embodiment of the present disclosure, and Fig. 2(B) is a side view illustrating the layout of the antennas.

As illustrated in Fig. 1(A), a load measuring device 20 includes antennas 201, 202, 203, and 204, receivers 211, 212, 213, and 214, and a processor 220. As illustrated in Fig. 1(B), the processor 220 may include a measurement base-line vector calculating module 221, a load calculating module 222, and a reference base-line vector memory 223. The receivers 211, 212, 213, and 214, and the processor 220 may be implemented by a storage device where a program for executing functions for the components is stored, and an arithmetic operation element (a CPU etc.) which executes the program stored in the storage device.

As illustrated in Figs. 2(A) and 2(B), the antennas 201, 202, 203, and 204 are disposed at positions in a hull 100 where positioning signals can be received.

The antenna 204 is disposed at a measurement position of the load in the hull 100. The load on the hull 100 is, for example, at least one of a deflection and a strain of the hull 100. The antennas 201, 202, and 203 may be disposed at positions of the hull 100 where a deformation does not easily occur. Although the position of the hull 100 where the deformation does not easily occur is desirable to be a position where the deformation does not absolutely easily occur, it may be at least a position where the deformation does not easily occur relatively as compared with the measurement position of the load. The antennas 201, 202, and 203 may correspond to "reference antennas" of the present disclosure, and the antenna 204 may correspond to a "load measurement antenna" of the present disclosure. Note that, the layout illustrated in this embodiment is one example, and when measuring a load by a deformation of a bow, for example, the load measurement antenna may be disposed at the bow, and the plurality of reference antennas may be disposed at different positions from the bow of the hull. That is, the reference antenna may be disposed at a different position from a load measurement position of the hull.

The antennas 201, 202, and 203 may be disposed at positions where one of the antennas is not located on a straight line which passes through other two antennas.

For example, in the example of Figs. 2(A) and 2(B), the antenna 204 may be disposed at an intermediate position of the hull 100 in the direction in which a bow 101 and a stern 102 are connected. The antennas 201 and 202 may be disposed on the top of a control room 110 near the stern 102 of the hull 100, and the antenna 203 may be disposed at a position near the bow 101 of the hull 100.

In more detail, a hull coordinate system (XB, YB, ZB) may be defined as follows. The XB-direction may be parallel to a heading line of the hull 100, and may be a direction toward the bow 101 from the stern 102. The YB-direction may be perpendicular to the heading line (XB-direction), and may be a direction toward the starboard from the port side. ZB may be perpendicular to the heading line (XB-direction) and the YB-direction, and may be a direction toward the ship's bottom side from the deck side.

In the XB-direction of the hull coordinate system, the antenna 201 and the antenna 202 may be disposed at positions different from the antenna 203. In the YB-direction of the hull coordinate system, the antenna 201, the antenna 202, and the antenna 203 may be disposed at different positions. In the hull coordinate system ZB, the antenna 201 and the antenna 202 may be disposed at different positions from the antenna 203. In the XB-direction and the YB-direction of the hull coordinate system, the antenna 204 may be disposed at a different position from the antenna 201, the antenna 202, and the antenna 203.

A line which connects the antenna 201 and the antenna 202 may be set as a base line BL12, a line which connects the antenna 202 and the antenna 203 may be set as a base line BL23, and a line which connects the antenna 203 and the antenna 201 may be set as a base line BL31. Moreover, a line which connects the antenna 201 and the antenna 204 may be set as a base line BL14, a line which connects the antenna 202 and the antenna 204 may be set as a base line BL24, and a line which connects the antenna 203 and the antenna 204 may be set as a base line BL34.

By arranging the antennas 201, 202, 203, and 204 as described above, the base lines BL14, BL24, and BL34 may not become parallel to the base lines BL12, BL23, and BL31. That is, the base-line vectors set respectively by the base lines BL12, BL23, and BL31 and the base-line vectors set respectively by the base lines BL14, BL24, and BL34 may be base-line vectors which are independent from each other.

The antennas 201, 202, 203, and 204 may receive the positioning signals, and output them to the receivers 211, 212, 213, and 214, respectively. The positioning signal may be a signal transmitted from a positioning satellite of a GNSS (Global Navigation Satellite System), such as GPS (Global Positioning System), and may be a signal obtained by modulating a carrier signal by using a code peculiar to each positioning satellite. The carrier signal may be superimposed with a navigation message including orbital information on the positioning satellite.

The receiver 211 may acquire and track the positioning signal received by the antenna 201, and measure a code phase and a carrier phase. The receiver 212 may acquire and track the positioning signal received by the antenna 202, and measure a code phase and a carrier phase. The receiver 213 may acquire and track the positioning signal received by the antenna 203, and measure a code phase and a carrier phase. The receiver 214 may acquire and track the positioning signal received by the antenna 204, and measure a code phase and a carrier phase.

Each of the receivers 211, 212, 213, and 214 may measure the code phase and the carrier phase at a given time interval. Each of the receivers 211, 212, 213, and 214 may output the measured carrier phase to the processor 220 along with a measured time. Note that the receivers 211, 212, 213, and 214 may output the code phases to the processor 220, or may output to the processor 220 code pseudo ranges acquired from the code phases or positioning results by the code pseudo ranges.

The processor 220 may include the measurement base-line vector calculating module 221, the load calculating module 222, and the reference base-line vector memory 223.

The measurement base-line vector calculating module 221 may calculate a measurement base-line vector by a known method based on carrier phase differences between the carrier phases inputted from the receivers 211, 212, 213, and 214. A measurement base-line vector XXn14 may be a base-line vector corresponding to the base line BL14 which connects the antenna 201 and the antenna 204, a measurement base-line vector XXn24 may be a base-line vector corresponding to the base line BL24 which connects the antenna 202 and the antenna 204, and a measurement base-line vector XXn34 may be a base-line vector corresponding to the base line BL34 which connects the antenna 203 and the antenna 204. These measurement base-line vectors XXn14, XXn24, and XXn34 may be calculated in a NED coordinate system (local tangent plane coordinate system).

Moreover, these measurement base-line vectors XXn14, XXn24, and XXn34 may be sequentially calculated over time at a time interval corresponding to the measurement cycle of the carrier phase. Therefore, according to a state of the load on the hull 100, the measurement base-line vectors XXn14, XXn24, and XXn34 may be determined.

The measurement base-line vector calculating module 221 may output the measurement base-line vectors XXn14, XXn24, and XXn34 to the load calculating module 222.

The reference base-line vector memory 223 may store reference base-line vectors XXbo14, XXbo24, and XXbo34. The reference base-line vector XXbo14 may correspond to the base line BL14 same as the measurement base-line vector XXn14, the reference base-line vector XXbo24 may correspond to the base line BL24 same as the measurement base-line vector XXn24, and the reference base-line vector XXbo34 may correspond to the base line BL34 same as the measurement base-line vector XXn34.

The reference base-line vectors XXbo14, XXbo24, and XXbo34 may be base-line vectors according to the load, in more detail, a state of the hull 100 before the load to be measured this time is applied. The reference base-line vectors XXbo14, XXbo24, and XXbo34 may be set in the hull coordinate system, and may be set beforehand based on designed dimensions of the hull 100 and various kinds of measurements of the hull 100.

The load calculating module 222 may calculate the load based on a comparison result between the measurement base-line vector XXn14 and the reference base-line vector XXbo14, a comparison result between the measurement base-line vector XXn24 and the reference base-line vector XXbo24, and a comparison result between the measurement base-line vector XXn34 and the reference base-line vector XXbo34.

Here, the coordinate system may differ between the measurement base-line vector and the reference base-line vector. However, if these coordinate systems are made in agreement with each other by using a method etc. described below, or these coordinate systems become in agreement with each other (when the bow direction is the same as the north direction), the load calculating module 222 can calculate the comparison result between the measurement base-line vector and the reference base-line vector. Further, the load calculating module 222 can calculate the comparison result between the measurement base-line vector and the reference base-line vector by storing all the patterns in the NED coordinate system, of the reference base-line vectors stored in the reference base-line vector memory 223 so that these coordinate systems are in agreement with each other.

In detail, the load calculating module 222 may calculate a displacement "u" in the XB-direction, a displacement "v" in the YB-direction, and a displacement "w" in the ZB direction, at the position of the antenna 204 based on each comparison result.

For example, the load calculating module 222 calculates differences between components of the measurement base-line vector XXn14 and the reference base-line vector XXbo14 as displacements u1, v1, and w1, differences between components of the measurement base-line vector XXn24 and the reference base-line vector XXbo24 as displacements u2, v2, and w2, and differences between components of the measurement base-line vector XXn34 and the reference base-line vector XXbo34 as displacements u3, v3, and w3. The load calculating module 222 may calculate a weighted average of the displacements u1, u2, and u3 as the displacement u, a weighted average of the displacements v1, v2, and v3 as the displacement v, and a weighted average of the displacements w1, w2, and w3 as the displacement w. Here, the weights of the average processing may be determined based on an error variance which changes according to the number of positioning satellites, a satellite layout (DOP: Dilution of Precision), etc. used for the calculation of the displacements.

Note that, although in this embodiment the displacements u, v, and w are calculated based on the three comparison results between the measurement base-line vectors and the reference base-line vectors, the displacements u, v, and w may be calculated based on a comparison result between the reference base-line vector and at least one of the measurement base-line vectors.

The load calculating module 222 may use the displacement w in the ZB direction as a deflection $\delta z$.

The load calculating module 222 may calculate a normal strain $\varepsilon x$ in the XB-direction by using the following formula based on the displacement u in the XB-direction.

$$\varepsilon x = du/dx$$

The load calculating module 222 may calculate a shearing strain $\gamma xy$ in the XB-YB plane by using the following formula based on the displacement u in the XB-direction and the displacement v in the YB-direction.

$$\gamma xy = \delta v/\delta x + \delta u/\delta y$$

Further, the load calculating module 222 may calculate a deflection angle $\theta$ by using the following formula based on the displacement w in the ZB direction.

$$\theta = dw/dx$$

Thus, the load measuring device 20 can calculate the load, such as the deflection, the strain, etc., which occurs in the hull 100, with a simple configuration using the positioning signal. Moreover, the load can be calculated with high precision by using the carrier phases of the positioning signals.

Although in the above description the processing of the processor 220 is executed individually for each of the functional parts, the method and program of the load measurement executed by the processor 220 may follow the following flowchart.

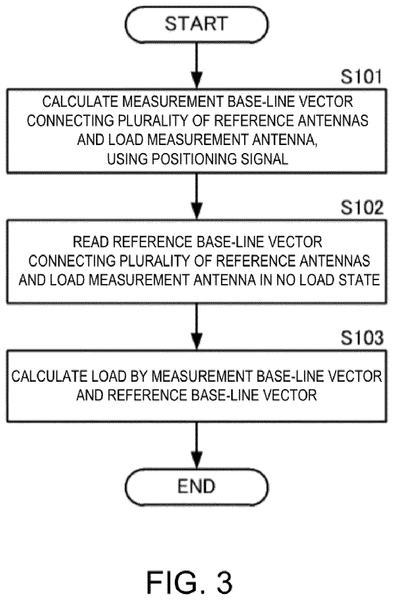

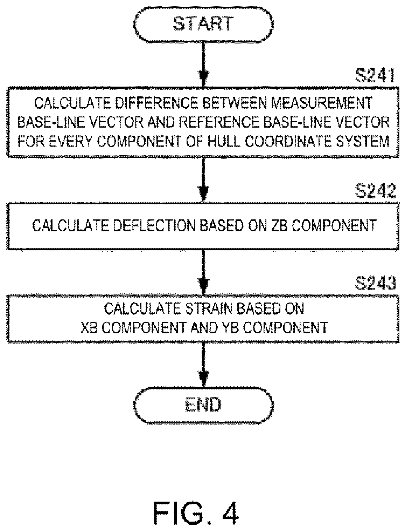

Fig. 3 is a first flowchart of the method of measuring the load according to the first embodiment of the present disclosure. Fig. 4 is a flowchart of the calculation of the load.

As illustrated in Fig. 3, the processor 220 may calculate the measurement base-line vectors XXn14, XXn24, and XXn34 which connect the plurality of reference antennas (the antennas 201, 202, and 203) and the load measurement antenna (the antenna 204) based on the positioning signals (S101). In more detail, the processor 220 may calculate the measurement base-line vectors XXn14, XXn24, and XXn34 based on the carrier phase differences of the positioning signals between the antennas.

Next, the processor 220 may read the reference base-line vectors XXbo14, XXbo24, and XXbo34 which connect the plurality of reference antennas (the antennas 201, 202, and 203), and the load measurement antenna (the antenna 204) in a state where there is no load (S102).

Next, the processor 220 may calculate the load by the method described above based on the measurement base-line vectors XXn14, XXn24, and XXn34, and the reference base-line vectors XXbo14, XXbo24 and XXbo34 (S103).

In detail, as illustrated in Fig. 4, the processor 220 may calculate the differences between the measurement base-line vectors XXn14, XXn24, and XXn34 and the reference base-line vectors XXbo14, XXbo24 and XXbo34 for every component of the hull coordinate system (XB, YB, ZB) (S241).

As described above, the processor 220 may calculate the deflection $\delta z$ based on the ZB component (S242). As described above, the processor 220 may calculate the normal strain $\varepsilon x$ based on the XB component, and calculate the shearing strain $\gamma xy$ based on the XB component and the YB component (S243).

In the description, the coordinate system of the measurement base-line vectors XXn14, XXn24, and XXn34 and the coordinate system of the reference base-line vectors XXbo14, XXbo24, and XXbo34 may become in agreement with each other, or can simply be made into agreement with each other. However, the following configuration and method may be used as one example of the concrete method of making the coordinate systems in agreement with each other.

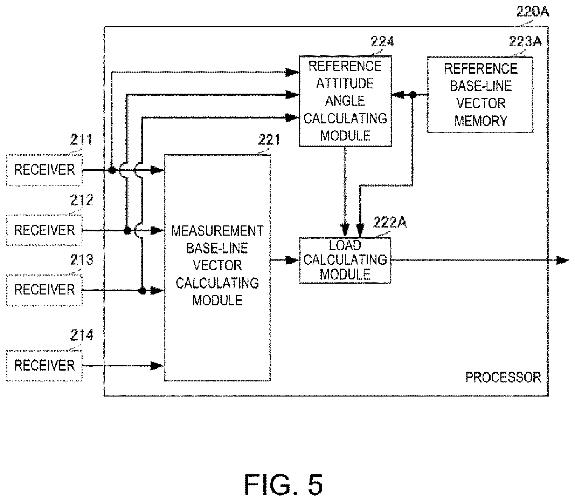

Fig. 5 is a functional block diagram of the processor of the load measuring device in a mode in which the measurement base-line vector is in the NED coordinate system and the reference base-line vector is in the hull coordinate system.

As illustrated in Fig. 5, a processor 220A may include the measurement base-line vector calculating module 221, a load calculating module 222A, a reference base-line vector memory 223A, and a reference attitude angle calculating module 224. The measurement base-line vector calculating module 221 may be similar to the measurement base-line vector calculating module 221 illustrated in Fig. 1(B), and it may calculate the measurement base-line vectors XXn14, XXn24, and XXn34 of the NED coordinate system, and output them to the load calculating module 222A.

The reference base-line vector memory 223A may store the reference base-line vectors XXbo14, XXbo24, and XXbo34 of the hull coordinate system, similar to the reference base-line vector memory 223. Further, the reference base-line vector memory 223A may store reference base-line vectors XXbo12, XXbo23, and XXbo31. The reference base-line vector XXbo12 may correspond to the base line BL12 of Fig. 2, the reference base-line vector XXbo23 may correspond to the base line BL23 of Fig. 2, and the reference base-line vector XXbo31 may correspond to the base line BL31 of Fig. 2.

The reference base-line vectors XXbo12, XXbo23, and XXbo31 may be the base-line vectors according to the load, in more detail, the state of the hull 100 before the load to be measured this time is applied. The reference base-line vectors XXbo12, XXbo23, and XXbo31 may be set in the hull coordinate system, and may be set beforehand based on the designed dimensions of the hull 100 and various kinds of measurements of the hull 100.

The carrier phases may be inputted into the reference attitude angle calculating module 224 from the receivers 211, 212, and 213. The reference attitude angle calculating module 224 may calculate the carrier phase differences between the antennas 201, 202, and 203 based on the carrier phases from the receivers 211, 212, and 213. The reference attitude angle calculating module 224 may calculate base-line vectors XXn12, XXn23, and XXn31 for the calculation of the attitude angle by using a known method based on the carrier phase differences. The base-line vector XXn12 for the calculation of the attitude angle may be the base-line vector corresponding to the base line BL12 which connects the antenna 201 and the antenna 202. The base-line vector XXn23 for the calculation of the attitude angle may be the base-line vector corresponding to the base line BL23 which connects the antenna 202 and the antenna 203. The base-line vector XXn31 for the calculation of the attitude angle may be the base-line vector corresponding to the base line BL31 which connects the antenna 203 and the antenna 201. The base-line vectors XXn12, XXn23, and XXn31 for the calculation of the attitude angle may be calculated in the NED coordinate system.

The reference attitude angle calculating module 224 may calculate reference attitude angles ($\varphi$s, $\theta$s, $\psi$s) based on the base-line vectors XXn12, XXn23, XXn31 for the calculation of the attitude angle and the reference base-line vectors XXbo12, XXbo23 and XXbo31.

Roughly, one base-line vector for the calculation of the attitude angle comprised of the base-line vectors XXn12, XXn23, and XXn31 for the calculation of the attitude angle is set as XXns, and one reference base-line vector comprised of the reference base-line vectors XXbo12, XXbo23 XXbo31 is set as XXbs. Moreover, a conversion matrix for converting the hull coordinate system into the NED coordinate system is set as $C_b^n$. The conversion matrix $C_b^n$ can be set by the reference attitude angles ($\varphi$s, $\theta$s, $\psi$s) using a known coordinates converting formula between the three-dimensional rectangular coordinates.

In this case, the following formula may be established.

$$XXbs = C_b^n \cdot XXns \qquad \ldots \text{(Formula A)}$$

In this formula, the base-line vector XXns for the calculation of the attitude angle may be a value measured by using the carrier phases, and the reference base-line vector XXbs may be a known value.

Therefore, the reference attitude angle calculating module 224 may substitute the base-line vector XXns and the reference base-line vector XXbs for the calculation of the attitude angle into Formula A to calculate each component of the conversion matrix $C_b^n$, and calculate the reference attitude angles ($\varphi$s, $\theta$s, $\psi$s).

The reference attitude angle calculating module 224 may output the reference attitude angles ($\varphi$s, $\theta$s, $\psi$s) or the conversion matrix $C_b^n$ set by the reference attitude angles ($\varphi$s, $\theta$s, $\psi$s) to the load calculating module 222A.

The load calculating module 222A may calculate the load based on the measurement base-line vectors XXn14, XXn24, and XXn34 of the NED coordinate system, the reference base-line vectors XXbo14, XXbo24, XXbo34 of the hull coordinate system, and the reference attitude angles ($\varphi$s, $\theta$s, $\psi$s) or the conversion matrix $C_b^n$. That is, the load calculating module 222A may calculate the load based on base-line vectors XXnb14, XXnb24, and XXnb34 obtained by converting the measurement base-line vectors XXn14, XXn24, and XXn34 of the NED coordinate system into the hull coordinate system by the conversion matrix $C_b^n$, and the reference base-line vectors XXbo14, XXbo24, and XXbo34 of the hull coordinate system. The method of calculating each load (the deflection $\delta z$, the normal strain $\varepsilon x$, the shearing strain yxy, and the deflection angle $\theta$) is described above, and, therefore, the description is omitted.

Thus, by using the configuration illustrated in Fig. 5, the measurement base-line vectors XXn14, XXn24, and XXn34 obtained in the NED coordinate system and the reference base-line vectors XXbo14, XXbo24, and XXbo34 of the hull coordinate system can be compared with each other in the hull coordinate system, and the load can be calculated.

Although in the above description the processing of the processor 220A is executed individually by each functional part, the method and program of the load measurement which are executed by the processor 220A may follow the following flowchart.

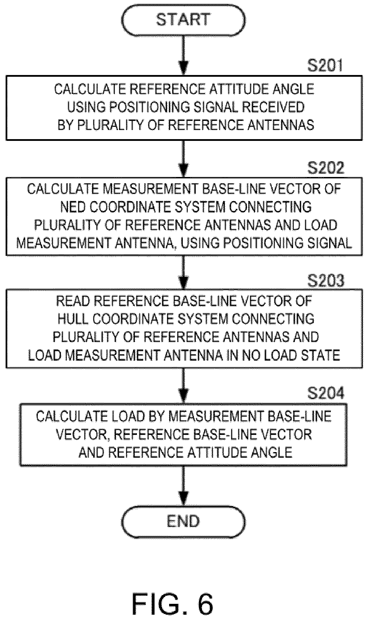

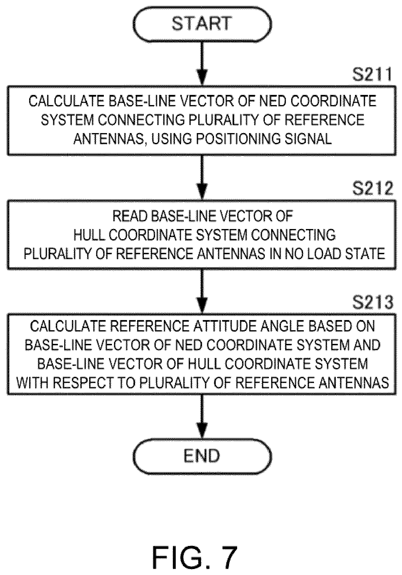

Fig. 6 is a second flowchart of the method of measuring the load according to the first embodiment of the present disclosure. Fig. 7 is a flowchart of the calculation of the reference attitude angle.

As illustrated in Fig. 6, the processor 220A may calculate the reference attitude angles ($\varphi$s, $\theta$s, $\psi$s) as described above based on the positioning signals received by the plurality of reference antennas (the antennas 201, 202, and 203) (S201).

In more detail, as illustrated in Fig. 7, the processor 220A may use the carrier phase differences between the antennas of the positioning signals received by the plurality of reference antennas (the antennas 201, 202, and 203) to calculate the base-line vectors XXn12, XXn23, and XXn31 for the calculation of the attitude angle which connect the plurality of reference antennas (the antennas 201, 202, and 203) to each other (S211). The processor 220A may read the reference base-line vectors XXbo12, XXbo23, and XXbo31 which connect the plurality of reference antennas (the antennas 201, 202, and 203) in the state where there is no load (S212). The processor 220A may calculate, by the method described above, the reference attitude angles ($\varphi$s, $\theta$s, $\psi$s) based on the base-line vectors XXn12, XXn23, XXn31 for the calculation of the attitude angle, and the reference base-line vectors XXbo12, XXbo23 and XXbo31 (S213).

As illustrated in Fig. 6, the processor 220A may calculate the measurement base-line vectors XXn14, XXn24, and XXn34 which connect the plurality of reference antennas (the antennas 201, 202, and 203) and the load measurement antenna (the antenna 204) based on the positioning signals (S202). In more detail, the processor 220A may calculate the measurement base-line vectors XXn14, XXn24, and XXn34 based on the carrier phase differences of the positioning signals between the antennas.

Next, the processor 220A may read the reference base-line vectors XXbo14, XXbo24, and XXbo34 which connect the plurality of reference antennas (the antennas 201, 202, and 203) and the load measurement antenna (the antenna 204) in the state where there is no load (S203).

Next, the processor 220A may calculate the load by the method described above based on the measurement base-line vectors XXn14, XXn24, and XXn34, the reference base-line vectors XXbo14, XXbo24 and XXbo34, and the reference attitude angles ($\varphi$s, $\theta$s, $\psi$s) (S204).

Next, a load calculating device, a method of calculating a load, and a load calculating program according to a second embodiment will be described with reference to the drawings.

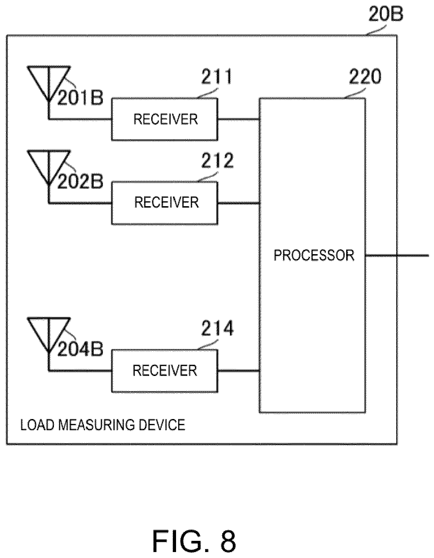

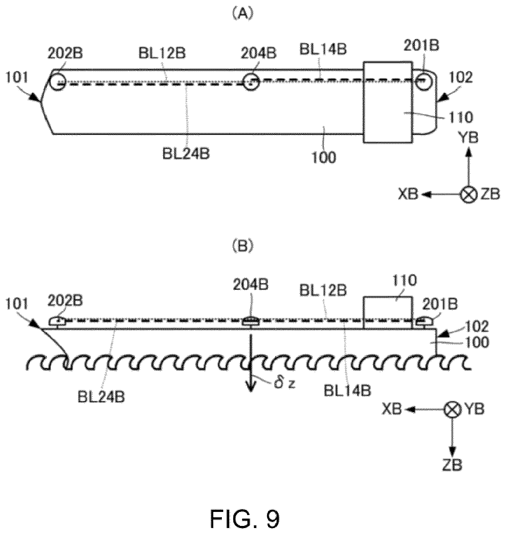

Fig. 8 is a functional block diagram of the load measuring device according to the second embodiment of the present disclosure. Fig. 9(A) is a plan view illustrating a layout of the antennas of the load measuring device according to the second embodiment of the present disclosure, and Fig. 9(B) is a side view illustrating the layout of the antennas.

As illustrated in Figs. 8, 9(A), and 9(B), a load measuring device 20B according to the second embodiment may differ in the number of placed antennas and the layout pattern in the hull 100, from the load measuring device 20 according to the first embodiment. Moreover, the load measuring device 20B may perform processing according to the differences in the number of placed antennas and the layout pattern. Note that the functional blocks of the processor 220 may be similar to those of Fig. 5, but the processings in each functional part may differ.

As illustrated in Fig. 8, the load measuring device 20B may include antennas 201B, 202B, and 204B, the receivers 211, 212, and 214, and the processor 220. The antenna 201B may output a received positioning signal to the receiver 211, the antenna 202B may output a received positioning signal to the receiver 212, and the antenna 204B may output the received positioning signal to the receiver 214.

As illustrated in Figs. 9(A) and 9(B), the antennas 201B, 202B, and 204B may be disposed at positions in the hull 100 where they can receive the positioning signals.

The antenna 204B may be disposed at a measurement position of the load in the hull 100. The antennas 201B and 202B may be disposed at positions in the hull 100 where deformations do not easily occur. The antennas 201B and 202B correspond to the "reference antenna" of the present disclosure, and the antenna 204B corresponds to the "load measurement antenna" of the present disclosure.

The antennas 201B and 202B may be disposed in parallel to the heading line of the hull 100, in other words, the direction which connects the bow 101 and the stern 102. The antenna 204B may be disposed on a straight line which passes through the antenna 201B and the antenna 202B.

For example, in the example of Figs. 9(A) and 9(B), the antenna 204B may be disposed at an intermediate position in the direction in which the bow 101 and the stern 102 are connected to each other in the hull 100. The antenna 201B may be disposed at a position near the stern 102 of the hull 100, and the antenna 202B may be disposed at a position near the bow 101 of the hull 100. The antennas 201B, 202B, and 204B may be disposed on one straight line parallel to the heading line of the hull 100.

In this configuration, a base-line BL12B which connects the antenna 201B and the antenna 202B, a base line BL14B which connects the antenna 201B and the antenna 204B, and a base line BL24B which connects the antenna 202B and the antenna 204B may be parallel to the heading line. Therefore, as for the reference base-line vector XXbo12 which connects the antenna 201B and the antenna 202B, the YB component and the ZB component may be 0, and may only have the XB component.

As described above, the processor 220 may calculate a base-line vector XXn12 for the calculation of the attitude angle based on the carrier phase difference between the positioning signals received by the antenna 201B and the antenna 202B. As described above, the processor 220 may calculate a pitch angle $\theta$s and a heading angle $\varphi$s in the reference attitude angle based on the base-line vector XXn12 for the attitude angle calculation, and the reference base-line vector XXbo12.

The processor 220 may suitably set a roll angle $\psi$s in the reference attitude angle. For example, the processor 220 sets the roll angle $\psi$s as 0. Alternatively, if each of the antennas 201B and 202B is provided with a plurality of antennas located close to each other, the processor 220 may calculate and set the roll angle $\psi$s by using a known attitude angle calculation method using the plurality of proximate antennas.

Similarly to the method illustrated in the first embodiment, the processor 220 may calculate a measurement base-line vector XXn14 of the NED coordinate system which connects the antenna 201B and the antenna 204B, and a measurement base-line vector XXn24 of the NED coordinate system which connects the antenna 202B and the antenna 204B. Moreover, similarly to the method illustrated in the first embodiment, the processor 220 may store the reference base-line vector XXbo14 of the hull coordinate system which connects the antenna 201B and the antenna 204B, and the reference base-line vector XXbo24 of the hull coordinate system which connects the antenna 202B and the antenna 204B.

The processor 220 may apply a similar method to the first embodiment based on the measurement base-line vectors XXn14 and XXn24 of the NED coordinate system, the reference base-line vectors XXbo14 and XXbo24 of the hull coordinate system, and the reference attitude angles ($\varphi$s, $\theta$s, $\psi$s) or the conversion matrix $C_b{}^n$ determined by the reference attitude angles, and may calculate a deflection $\delta z$ at the load.

By such a configuration, the number of reference antennas can be reduced to two, and, therefore, the configuration for measuring the deflection can be simplified.

Next, a load calculating device, a method of calculating a load, and a load calculating program according to a third embodiment are described with reference to the drawings.

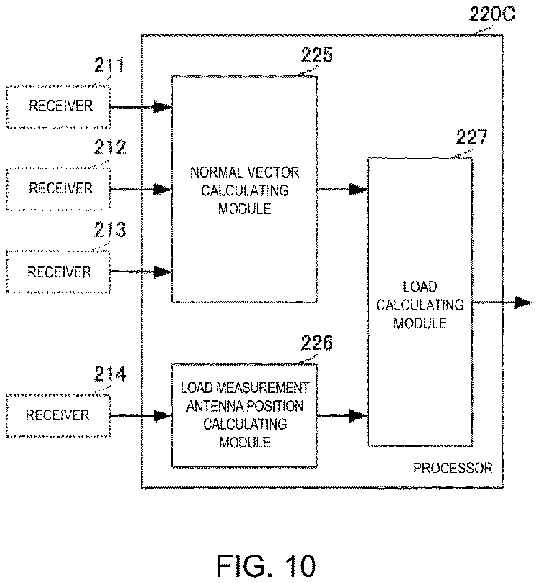

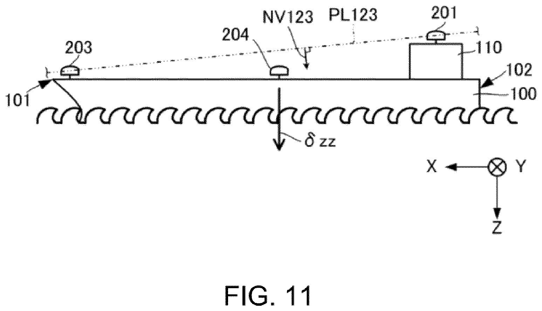

Fig. 10 is a functional block diagram of the load measuring device according to the third embodiment of the present disclosure. Fig. 11 is a side view illustrating a layout of the antennas of the load measuring device according to the third embodiment of the present disclosure.

As illustrated in Figs. 10 and 11, the load measuring device according to the third embodiment may differ in the configuration of a processor 220C from the load measuring device 20 according to the first embodiment. Other configurations of the load measuring device according to the third embodiment may be similar to those of the load measuring device 20, and, therefore, the description of the same parts is omitted.

The processor 220C may include a normal vector calculating module 225, a load measurement antenna position calculating module 226, and a load calculating module 227. Code phases and carrier phases may be inputted into the normal vector calculating module 225 from the receivers 211, 212, and 213. A code phase and a carrier phase may be inputted into the load measurement antenna position calculating module 226 from the receiver 214.

The normal vector calculating module 225 may calculate relative position coordinates P1 of the antenna 201, relative position coordinates P2 of the antenna 202, and relative position coordinates P3 of the antenna 203 with respect to a reference point of the hull 100 based on the code phases or the carrier phases inputted from the receivers 211, 212, and 213. These relative position coordinates P1, P2, and P3 may be three-dimensional coordinates, and they may be in the coordinate system, such as the ECEF coordinate system (Earth-Centered Earth-Fixed Rectangular Coordinate System) and the NED coordinate system. The reference point may be any position of the hull 100, and, for example, may be the position of the antenna 201, the position of the antenna 202, or the position of the antenna 203.

The normal vector calculating module 225 may calculate a normal vector NV123 of a reference plane PL123 including the antennas 201, 202, and 203 based on the relative position coordinates P1, P2, and P3. Three components of the normal vector NV123 may be calculated by an outer product operation of the known relative position coordinates P1, P2, and P3. The normal vector calculating module 225 may make the three components of the normal vector NV123 into unit vectors by dividing the three components by a respective absolute value. The normal vector calculating module 225 may output the unit vectors of the three components of the normal vector NV123 to the load calculating module 227.

The load measurement antenna position calculating module 226 may calculate a relative position coordinates P4 of the antenna 204 with respect to the reference point of the hull 100 based on the code phase or the carrier phase inputted from the receiver 214. The reference point with respect to the relative position coordinates P4 of the antenna 204 may be the same as the reference points of the relative position coordinates P1, P2, and P3 of the antennas 201, 202, and 203. Moreover, the relative position coordinates P4 may be calculated by the same coordinate system as the relative position coordinates P1, P2, and P3. The load measurement antenna position calculating module 226 may output the relative position coordinates P4 to the load calculating module 227.

The load calculating module 227 may calculate a distance between the reference plane PL123 including the antennas 201, 202, and 203 and the antenna 204 by performing an inner product operation of the normal vector NV123 and the relative position coordinates P4. This distance may depend on the deflection caused by the load on the hull 100.

Therefore, by performing such a configuration and processing, the distance between the reference plane PL123 of which the position is fixed and the antenna 204 of which the position changes by the load can be calculated, and this distance can be used as the load index value.

Moreover, by using the configuration and the method of this embodiment, it may not be necessary to perform the coordinates conversion based on the reference attitude angle as illustrated in the first and second embodiments. Therefore, the load on the hull 100 can be calculated by the simple processing. Note that, a load index value $\delta zz$ corresponding to the deflection of the hull 100 can be calculated based on the relative coordinates of the antennas with respect to the reference point of the hull, i.e., the antenna layout positions and the distance.

Although in the above description the processing of the processor 220C is executed individually by each functional part, the method and program of the load measurement which are executed by the processor 220C may follow the following flowchart. Fig. 12 is a flowchart of the method of measuring the load according to the third embodiment of the present disclosure.

As illustrated in Fig. 12, the processor 220C may calculate the relative position coordinates P1, P2, and P3 of the three reference antennas (the antennas 201, 202, and 203) with respect to a specific reference point based on the positioning signals (S301).

The processor 220C may calculate the normal vector NV123 in the reference plane including the three reference antennas (the antennas 201, 202, and 203) by the method described above using the relative position coordinates P1, P2, and P3 (S302).

The processor 220C may calculate the relative position coordinates P4 of the load measurement antenna (the antenna 204) with respect to the specific reference point based on the positioning signal (S303).

The processor 220C may calculate the load index value $\delta zz$ in the direction described above based on the normal vector 123 and the relative position coordinates P4 (S304).

Note that, although in this embodiment one reference plane is set, a plurality of reference planes may be set, and the load may be calculated based on the positions of the plurality of reference planes and the antenna 204. In this case, four or more reference antennas may be installed according to the number of set reference planes.

Moreover, although in the above description the ship is described as the example, the present disclosure is also applicable to large-sized movable bodies, such as aircrafts, and large-sized structures, in which the deflection, and the strain occur. However, the configuration and processing of the present disclosure are effective in those of which the position changes, such as the large-sized movable bodies.

Moreover, the load can be calculated by simple configuration and processing using a configuration and processing comprised of the following concept, without using only the configuration and processing described above. A load measurement antenna may be disposed at a position of the hull for measuring the load, and a plurality of reference antennas may be disposed at a plurality of positions of the hull where deformations do not occur easily as compared with the position for measuring the load. The positioning signal may be received by each of the load measurement antenna and the plurality of reference antennas. A processor may calculate an index depending on changes in relative positions of the load measurement antenna with respect to the plurality of reference antennas based on the positioning signals, and may calculate the load based on the index.

DESCRIPTION OF REFERENCE CHARACTERS

20, 20B: Load Measuring Device
100: Hull
101: Bow
102: Stern
110: Control Room
123: Normal Vector
201, 201B, 202, 202B, 203, 204, 204B: Antenna
211, 212, 213, 214: Receiver
220, 220A, 220C: Processor
221: Measurement Base-line Vector Calculating Module
222, 222A, 227: Load Calculating Module
223 223A: Reference Base-line Vector Memory
224: Reference Attitude Angle Calculating Module
225: Normal Vector Calculating Module
226: Load Measurement Antenna Position Calculating Module
BL12, BL12B, BL14, BL14B, BL23, BL24, BL24B, BL31, BL34: Base Line
NV123: Normal Vector
P1, P2, P3, P4: Relative Position Coordinates
PL123: Reference Plane
XXbo12, XXbo14, XXbo23, XXbo24, XXbo31, XXbo34, XXbs: Reference
Base-line Vector
XXn14, XXn24, XXn34: Measurement Base-line Vector
XXn12, XXn23, XXn31: Base-line Vector for Calculation of Attitude Angle
XXnb14: Base-line Vector
XXns: Base-line Vector

**Claims**

1. A load measuring device, comprising:

a load measurement antenna disposed at a load measuring position of a structure;
a plurality of reference antennas disposed at positions of the structure different from the load measuring position; and
a processor configured to calculate a load based on changes in relative positions of the load measurement antenna with respect to the plurality of reference antennas by using positioning signals received by the load measurement antenna and the plurality of reference antennas.

2. The load measuring device of claim 1, wherein the processor includes:

a measurement base-line vector calculating module configured to calculate measurement base-line vectors connecting the load measurement antenna and the plurality of reference antennas by using carrier phases of the positioning signals received by the load measurement antenna and the plurality of reference antennas; and
a load calculating module configured to calculate the load based on reference base-line vectors connecting the load measurement antenna and the plurality of reference antennas in a state before the load is applied to the structure, and at least one of the measurement base-line vectors.

3. The load measuring device of claim 2, comprising a reference attitude angle calculating module configured to calculate a reference attitude angle of the structure based on the carrier phases of the positioning signals received by the plurality of reference antennas,
wherein the load calculating module defines and stores the reference base-line vectors in the state before the load is applied to the structure in a coordinate system peculiar to the structure, and calculates the load based on the reference base-line vectors, the reference attitude angle, and the measurement base-line vectors.

4. The load measuring device of claim 3, wherein the load calculating module calculates a coordinates conversion matrix for the coordinate system peculiar to the structure and a coordinate system using the positioning signals based on the reference attitude angle, and calculates the load based on the coordinates conversion matrix by coinciding the coordinates of the reference base-line vectors and the coordinates of the measurement base-line vectors.

5. The load measuring device of claim 3 or 4, wherein the reference attitude angle calculating module calculates a first base-line vector of a coordinate system using the positioning signals connecting the plurality of reference antennas based on the carrier phases of the positioning signals received by the plurality of reference antennas, and calculates the reference attitude angle based on a second base-line vector defined beforehand of the coordinate system peculiar to the structure, and the first base-line vector.

6. The load measuring device of any one of claims 1 to 5, wherein the reference antennas are disposed at least at three positions that are not lined up on a straight line, and the load measurement antenna is disposed at a different position from the base-lines connecting the respective reference antennas.

7. The load measuring device of any one of claims 1 to 5, wherein the number of reference antennas is two, and the two reference antennas are disposed in parallel to a reference line of the structure, and wherein the load measurement antenna is disposed on a straight line connecting the two reference antennas.

8. The load measuring device of claim 1, wherein the plurality of reference antennas are reference antennas installed at least at three positions, and wherein the processor includes:

a normal vector calculating module configured to calculate a normal vector of a plane including the reference antennas disposed at least at the three positions;
a load measurement antenna position calculating module configured to calculate a layout position of the load measurement antenna based on the positioning signal received by the load measurement antenna; and
a load calculating module configured to calculate the load based on the normal vector, and the layout position of the load measurement antenna.

9. The load measuring device of claim 8, wherein the normal vector calculating module calculates the layout position of each of the reference antennas disposed at least at the three positions based on the positioning signals received by the reference antennas disposed at least at the three positions, and calculates the normal vector of a plane including the reference antennas disposed at least at the three positions.

10. The load measuring device of any one of claims 1 to 9, wherein the load is a deflection or strain of the structure.

11. The load measuring device of any one of claims 1 to 10, wherein the structure is a hull.

12. A method of measuring a load, comprising the steps of:

receiving positioning signals by a load measurement antenna disposed at a load measuring position of a structure and a plurality of reference antennas disposed at positions different from the load measuring position; and

calculating the load based on changes in relative positions of the load measurement antenna with respect to the plurality of reference antennas by using the positioning signals.

13. The method of claim 12, wherein the calculating the load includes:

calculating measurement base-line vectors connecting the load measurement antenna and the plurality of reference antennas by using carrier phases of the positioning signals received by the load measurement antenna and the plurality of reference antennas; and

calculating the load based on reference base-line vectors connecting the load measurement antenna and the plurality of reference antennas in a state before the load is applied to the structure, and at least one of the measurement base-line vectors.

14. The method of claim 12, wherein the plurality of reference antennas are reference antennas installed at least at three positions, and

wherein the calculating the load includes:

calculating a normal vector of a plane including the reference antennas disposed at least at the three positions;

calculating a layout position of the load measurement antenna based on the positioning signal received by the load measurement antenna; and

calculating the load based on the normal vector, and the layout position of the load measurement antenna.

15. A load measurement program configured to cause a processor to execute processing comprising:

receiving positioning signals by a load measurement antenna disposed at a load measuring position of a structure and a plurality of reference antennas disposed at positions different from the load measuring position; and

calculating a load based on changes in relative positions of the load measurement antenna with respect to the plurality of reference antennas by using the positioning signals.

16. The load measurement program of claim 15, wherein the calculating the load includes:

calculating measurement base-line vectors connecting the load measurement antenna and the plurality of reference antennas by using carrier phases of the positioning signals received by the load measurement antenna and the plurality of reference antennas; and

calculating the load based on reference base-line vectors connecting the load measurement antenna and the plurality of reference antennas in a state before the load is applied to the structure, and at least one of the measurement base-line vectors.

17. The load measurement program of claim 15, wherein the calculating the load includes:

calculating a normal vector of a plane including the reference antennas disposed at least at three positions as a plurality of reference antennas;

calculating a layout position of the load measurement antenna based on the positioning signal received by the load measurement antenna; and

calculating the load based on the normal vector, and the layout position of the load measurement antenna.

(A)

(B)

FIG. 1

FIG. 2

START

S101

CALCULATE MEASUREMENT BASE-LINE VECTOR
CONNECTING PLURALITY OF REFERENCE ANTENNAS
AND LOAD MEASUREMENT ANTENNA,
USING POSITIONING SIGNAL

S102

READ REFERENCE BASE-LINE VECTOR
CONNECTING PLURALITY OF REFERENCE ANTENNAS
AND LOAD MEASUREMENT ANTENNA IN NO LOAD STATE

S103

CALCULATE LOAD BY MEASUREMENT BASE-LINE VECTOR
AND REFERENCE BASE-LINE VECTOR

END

# FIG. 3

START

S241
CALCULATE DIFFERENCE BETWEEN MEASUREMENT
BASE-LINE VECTOR AND REFERENCE BASE-LINE VECTOR
FOR EVERY COMPONENT OF HULL COORDINATE SYSTEM

S242
CALCULATE DEFLECTION BASED ON ZB COMPONENT

S243
CALCULATE STRAIN BASED ON
XB COMPONENT AND YB COMPONENT

END

FIG. 4

FIG. 5

START

S201

CALCULATE REFERENCE ATTITUDE ANGLE
USING POSITIONING SIGNAL RECEIVED
BY PLURALITY OF REFERENCE ANTENNAS

S202

CALCULATE MEASUREMENT BASE-LINE VECTOR OF
NED COORDINATE SYSTEM CONNECTING
PLURALITY OF REFERENCE ANTENNAS AND LOAD
MEASUREMENT ANTENNA, USING POSITIONING SIGNAL

S203

READ REFERENCE BASE-LINE VECTOR OF
HULL COORDINATE SYSTEM CONNECTING
PLURALITY OF REFERENCE ANTENNAS AND
LOAD MEASUREMENT ANTENNA IN NO LOAD STATE

S204

CALCULATE LOAD BY MEASUREMENT BASE-LINE
VECTOR, REFERENCE BASE-LINE VECTOR
AND REFERENCE ATTITUDE ANGLE

END

# FIG. 6

START

S211

CALCULATE BASE-LINE VECTOR OF NED COORDINATE
SYSTEM CONNECTING PLURALITY OF REFERENCE
ANTENNAS, USING POSITIONING SIGNAL

S212

READ BASE-LINE VECTOR OF
HULL COORDINATE SYSTEM CONNECTING
PLURALITY OF REFERENCE ANTENNAS IN NO LOAD STATE

S213

CALCULATE REFERENCE ATTITUDE ANGLE BASED ON
BASE-LINE VECTOR OF NED COORDINATE SYSTEM AND
BASE-LINE VECTOR OF HULL COORDINATE SYSTEM
WITH RESPECT TO PLURALITY OF REFERENCE ANTENNAS

END

FIG. 7

20B

201B

211

RECEIVER

220

202B

212

RECEIVER

PROCESSOR

204B

214

RECEIVER

LOAD MEASURING DEVICE

## FIG. 8

(A)

202B  BL12B  204B  BL14B  201B

101  102

110

BL24B  100

YB

XB ⊗ ZB

(B)

204B  BL12B  110

101  202B  201B

102
100

δz

BL24B  BL14B

XB ⊗ YB

ZB

FIG. 9

220C

211

225

RECEIVER

212

RECEIVER

NORMAL VECTOR
CALCULATING
MODULE

227

213

RECEIVER

LOAD
CALCULATING
MODULE

214

226

RECEIVER

LOAD MEASUREMENT
ANTENNA POSITION
CALCULATING
MODULE

PROCESSOR

FIG. 10

FIG. 11

## INTERNATIONAL SEARCH REPORT

| International application No. |
|---|
| PCT/JP2018/012368 |

### A. CLASSIFICATION OF SUBJECT MATTER

Int. Cl. G01S19/14(2010.01)i, B63B49/00(2006.01)i, B64F5/60(2017.01)i, G01B21/32(2006.01)i, G01S19/54(2010.01)i

According to International Patent Classification (IPC) or to both national classification and IPC

### B. FIELDS SEARCHED

Minimum documentation searched (classification system followed by classification symbols)
Int. Cl. G01S5/00-5/14, G01S19/00-19/55, B63B49/00, B64F5/60, G01B21/32

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2008-175676 A (MAEDA CORP.) 31 July 2008, paragraphs [0020], [0024]-[0029], fig. 4, 5 (Family: none) | 1-3, 6, 10, 12-13, 15-16 |
| Y | | 4-5, 11 |
| A | | 7-9, 14, 17 |
| Y | JP 2006-153816 A (FURUNO ELECTRIC CO., LTD.) 15 June 2006, paragraphs [0030]-[0041] (Family: none) | 4-5, 11 |
| A | WO 2015/125532 A1 (FURUNO ELECTRIC CO., LTD.) 27 August 2015, paragraph [0002] & US 2017/0059445 A1 & EP 3109674 A1 | 1-6, 10-13, 15-16 |
| A | JP 2014-202571 A (FURUNO ELECTRIC CO., LTD.) 27 October 2014, paragraph [0007] (Family: none) | 4-5, 11 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15.06.2018 | 26.06.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)